# EUROPEAN PATENT SPECIFICATION

(11) **EP 4 504 468 B1**
(45) Date of publication and mention of the grant of the patent: **17.12.2025**
(21) Application number: 23713767.4
(22) Date of filing: 15.02.2023
(51) Int. Cl.: B27L 7/06, B23D 55/00, B23D 55/08, B27B 15/04, B27B 13/02

(54) **TIMBER PROCESSING AND FIREWOOD SPLITTING MACHINE**
HOLZBEARBEITUNGS- UND BRENNHOLZSPALTMASCHINE
MACHINE DE DÉBITAGE DE BOIS ET DE FENDAGE DE BOIS DE CHAUFFAGE

(30) Priority: 04.04.2022 SI 202200046
(43) Date of publication of application: 12.02.2025
(73) Proprietor: Tajfun Planina Proizvodnja Strojev, D.o.o., 3225 Planina Pri Sevnici (SI)
(72) Inventor: PERTINAC, Srecko, 3230 Sentjur (SI); KOPRIVC, David, 3264 Sveti Stefan (SI)
(74) Representative: Borstar, Dusan
(86) International application number: PCT/SI2023/000001
(87) International publication number: WO 2023/195933

(56) References cited:
- EP-A1- 2 684 657
- EP-A1- 2 789 437
- DE-A1- 3 030 970
- DE-U1- 202004 015 554
- DE-U1- 202005 021 709
- US-A- 1 530 682
- US-B2- 10 464 149

## Description

Within performing operations, the present invention refers to wood processing, namely to firewood splitting machines, in which blades or wedges are used. Pursuant to the International Patent Classification, such inventions should belong to the class B 27 L 07/06. In parallel, such invention might also refer to working machines, namely to blade saws, in which an endless band with a plurality of cutting elements is used, so that such and invention could also belong to the class B 23 D 55/00.

In this, the invention is rest on a problem, how to conceive a machine, by means of which a timber could be economically, namely with minimal energy consumption and with minimal losses of a wood volume, gradually i.e. step by step, sawn to separate sections of a predetermined length, while immediately upon sawing, each particular sawn timber section should be further split to firewood pieces suitable for direct application in household furnaces.

Machines are known from the state of the art, which are suitable for a so-called one-phase splitting of timber sections, which have been previously sawn to a pre-determined length, wherein such machines are furnished with a splitting unit, which may comprise either a single or multiple cutting blade. Such machine enables splitting of said timber section of a pre-determined length either to two or more firewood pieces just in a single phase, namely on the basis of a single movement of the splitting unit relatively to said timber section. Such a machine with a single cutting blade is disclosed in CA 1,084,814, and is in view of productivity pretty inefficient and uneconomical. A further machine, which comprises several cutting edges, is disclosed in PCT/CH2005/000175 and is in correspondingly improved with regard to the earlier mentioned machine, but the forces, which are required for the purposes of splitting, are pretty high, so that such machine is quite bulky and energy consuming, and in addition to that, each transporting thereof to each working place appears to be quite complicated.

A multi-phase firewood splitting machine is disclosed in WO 99/64214. Such machine comprises a bearing frame, which is furnished with supporting legs and is therefore held at a desired distance above the ground. Longitudinal bearing walls of said bearing frames are furnished with guides, which are suitable for guiding of a further guiding frame, which is adjusted for receiving of a timber section, which is intended to be split and may be thanks to said guide displaced in the longitudinal direction of the bearing frame. A supporting plate is arranged between said bearing walls of said bearing frame, which define the longitudinal direction of the machine, and said supporting plate is intended for supporting of a previously sawed timber section, when separated from the rest of the timber, as long as said timber section remains located within the area of said bearing frame. The length of the supporting plate should not be shorter than the length of the guiding frame or the length of the timber section, which should be split. A driving means is foreseen in the one terminal area of said bearing frame, and is capable for establishing relative movement of each timber section, which is intended to be split, relatively to each disposable splitting unit, namely for displacing of said guiding frame relatively to the bearing frame. Said driving means is a longitudinally extending hydraulic cylinder, which is on the one hand attached to said bearing frame, while on the other hand, a piston road thereof is connected with said guiding frame. A splitting unit is arranged on the other terminal area of the bearing frame and comprises several of cutting edges, namely a primary cutting edge in form of a plate, which is available in a horizontal plane, as well as several secondary cutting edges, which are offset with regard to said primary cutting edge in a direction apart from the guiding frame and are arranged at suitable distances apart from each other below said primary cutting edge, so that each of them extends in a longitudinal direction of the machine. Each particular timber section is placed onto said guiding frame, upon which said guiding frame is by means of the driving means pushed towards the splitting unit, in which the timber section is split to several firewood pieces, which then freely fall into a collector or onto ground below the bearing frame. Such multi-phase firewood splitting machine is also disclosed in SI 25007 A and SI 25612 A.

When desired, each timber can be sawn to several sections of a pre-determined length, which is suitable for application of firewood pieces in household furnaces, even in the area outside of the machine, e.g. by means of an engine-powered hand-operated chainsaw, which is disclosed e.g. in US 2019/0111582 A1, but in such case the timber sections then need to be one by one brought onto said guiding frame. Such saw is an engine-powered hand-operated saw, which comprises a suitable frame, which is embedded within in a suitable casing with an ergonomically designed grip, as well as with a chain guiding blade, which protrudes out from the casing and is formed as s plate, which is on its terminal area semi-circularly ended and the circumferential edge of which is adjusted for guiding of the endless sawing chain. A driving wheel for moving the chain, when placed thereon, is arranged within the interior of said casing and is via a suitable shaft connected with a driving engine. Said blade should normally also be displaceable in a direction towards said chain wheel or in the opposite direction, by which a required tensioning of the chain may be performed, when required. The chain as such comprises lamellar links with outwardly directed protrusions with cutting edges formed thereon. As soon as such chain is in contact with wood, and is thanks to rotation of said driving chain wheel displaced relatively to the wood, said cutting edges start one by one gradually cutting the wood, and in such a way then the timber can be gradually cut over its complete depth i.e. along the complete diameter. It should however be born in mind that such cutting may be performed pretty quickly and efficiently, but the process as such is pretty uneconomic. On the one hand, just driving the chain, overcoming a friction between the links and forced sliding of the chain due to forces, which are required for sawing, leads to essential energy consumption, and despite to intensive lubricating quite often also to overheating. On the other hand, due to the constructional design of such chainsaw, namely due to a required thickness of the saw blade as well as the chain links, the width of the cutting area may also be essential and is in the practice nearly 1 cm. This of course means that, when cutting a timber to sections, an essential quantity of wood volume is lost, namely around 2 - 5%, which indirectly also means a proportional energy loss, and from quite economical point of view also a correspondingly worse yield.

Firewood splitting machines are also known in the state of the art, e.g. in SI 25612 A, in which such saw with an endless chain is pivotally mounted onto the bearing frame of the machine in a suitable position to enable sawing the timber to said section prior to splitting thereof due to producing firewood pieces. In such case, the saw is pivotal around a pivot point, which must be located outside of the circumference of the maximal admissible timber, while its cutting blade must be sufficiently long that the saw is able to cut the timber along its complete transversal cross-section during a single pivoting stroke and without any rotating of the timber. As soon as each timber is in its integral state completely loaded onto the machine, it is then in the area of the conveyor step by step cut to separate timber sections, end each obtained timber section is promptly upon that split to several firewood pieces. In professional machines, the maximal thickness of a timber, which is still allowed to be processed, may go up to 50 cm or even more, which of course required correspondingly long saw blade together with a required chain, which leads to correspondingly high energy and power consumption.

Various sawing machines are also known in the field of cutting of metals, where an endless flexible metallic band is used as a cutting tool, wherein said band is bent to form and endless loop, and is along its one longitudinal edge furnished with a plurality of mutually spaced teeth, which are each per se furnished with cutting edges. Said endless band is placed around a pair of rolls, which are suitably spaced apart from each other, and one of said rolls is via a shaft connected with a driving motor. Such sawing machine is e.g. disclosed in EP 3 031 561 B1 and comprises a bearing frame, in which said rolls are embedded together with said band and driving motor. The rolls are located in a plane, which extends inclined with regard to the ground, or to horizontal or vertical geometric plane. A vise, suitable for attaching of a working piece as intended to be sawn, should be arranged in the area between said rolls, namely below a linear i.e. undeflected area of the sawing band. Sawing as such is performed along the vertical geometric plane, while the progression of the sawing blade throughout the working piece may be achieved either by means of displacing of said vise relative to fixed rolls, or by displacing the rolls together with the sawing band in a direction towards the working piece, wherein of course also the sawing band must be properly supported in order to avoiding sliding thereof along the surface of the rolls in a direction away from the working piece. As mentioned, said rolls incl. the belonging sawing band are arranged inclined with respect to said vertical plane, so that the sawing band must be by means of suitable rigid guiding means just in the sawing area temporarily deflected from said inclined position exactly into a vertical plane. By processing of metals, such approach may be acceptable, since the thickness of the working piece, when compared with the overall length of the band, in particular of each linear area of the sawing band between the rolls, is relatively small, so that such temporarily deflection of the sawing band into said vertical plane appears to be feasible. However, when sawing a timber having a much larger diameter, such approach becomes impossible, since this would unavoidably lead to extreme dimensions of the sawing machine, which could be then substantially much larger than the firewood splitting machine itself. Despite to benefits resulting from application of such sawing machine, like elimination of returning strokes with corresponding time and energy consumption, the need on deflection of the sawing band would, despite to intensive lubricating, lead to essential friction and wearing, which leads to correspondingly higher energy consumption and also to serious risks in the view of reliability of the sawing band during a long-term use, regardless on the sharpness of the cutting edges thereon. Further prior art can be found in DE202004015554U1 which discloses the preamble of claim 1.

The present invention refers to a timber processing and firewood splitting machine.

Such machine generally comprises
- a self-standing bearing frame, which is suitable for being placed on the ground;
- a conveying unit, which is arranged in one terminal area of said bearing frame and is adjusted for step-by-step forwarding of a timber with a pre-determined diameter in the longitudinal direction of said bearing frame;
- a cutting unit, which is suitable for cutting said timber to separate longitudinal sections of a pre-determined length and is arranged in the area above said conveying unit;
- a guiding unit, which is suitable for guiding of each particular longitudinal timber section in said longitudinal direction and along a geometric axis towards a working area, where a splitting assembly is arranged, which is intended for splitting of each longitudinal section of the timber to several firewood pieces, wherein said splitting assembly comprises at least a splitting unit, which is by means of a suitable driving unit displaceable to and fro along said longitudinal geometric axis, as well as
- a supporting assembly, which is arranged below the bearing frame at a suitable distance above the ground, and which comprises two one towards the other directed flaps, which are adjusted for supporting firewood pieces, upon being split apart from the rest of said longitudinal section of the timber and apart from said splitting unit, and are mainly maintained in approximately horizontal position, but may also be pivoted into an inclined or even vertical position, when necessary.

The invention proposes that said cutting unit is conceived as a band saw with an endless saw band blade with a cutting area which is formed by equally spaced cutting teeth and is directed downwardly towards the ground and towards the guiding unit in the area between said conveying unit for forwarding said timber and said working area with said splitting unit. Said endless saw band blade is bent to form a loop, which is located substantially in a horizontal plane and comprises a straight operational area, which is oriented transversally with respect to said longitudinal direction of the bearing framework and also to a direction of forwarding the timber, and wherein the length of said straight operational area is longer than the diameter of the maximal admissible timber of or each belonging longitudinal timber section. Said endless saw band blade is, with exception of said straight operational area, embedded within a casing of the cutting unit, and is within said casing adjusted to be run over suitable guiding rolls, at least one of which is via a suitable shaft connected with a driving means, wherein each of said guiding rolls is adapted both for guiding of said endless saw band blade and also for supporting thereof due to disabling any movement thereof relatively to said rolls and said casing in a vertical direction. Said casing of the cutting unit is mounted on a column and is by means of a suitable driving unit displaceable in a controlled manner in vertical direction at least for a distance, which exceeds maximal admissible diameter of the timber, and is moreover in the area adjacent to said straight horizontal working area of the saw band blade in a horizontal plane above said guiding unit furnished with a recess, the longitudinal dimension of which along said geometric axis in a direction of forwarding of the timber exceeds the length of each admissible section of the timber, while its transversal dimension substantially corresponds to the length of said straight operational area of the saw band blade and should therefore exceed the maximal diameter of the timber or each cut-off timber section.

Embodiments of the invention are foreseen, in which three rolls are foreseen for guiding and driving of said saw band blade, which are located within said casing and are each per se rotatable around a corresponding geometric axis and arranged in corners of either a virtual equilateral triangle or a virtual isosceles triangle, which is however symmetric with respect to said longitudinal geometric axis, along which the timber is forwarded, and located in a horizontal plane above said guiding unit in the area between said conveying unit for forwarding said timber and said working area with said splitting unit. In further possible embodiments, four rolls are foreseen for guiding and driving of said saw band blade, which are located within said casing and are each per se rotatable around a corresponding geometric axis and arranged in corners of either a virtual square or a virtual rectangle, which is however symmetric with respect to said longitudinal geometric axis, along which the timber is forwarded, and located in a horizontal plane above said guiding unit in the area between said conveying unit for forwarding said timber and said working area with said splitting unit. In all aforementioned embodiments the roll, which is selected to be a driving roll, is preferably located in the area in which the casing with the endless saw band blade is mounted to said column.

The invention will also be explained in more detail by means of an embodiment, which is shown in the attached drawing, in which
- Fig. 1: is an isometric view of a timber processing and firewood splitting machine in a position just prior to cutting-off a timber section; and
- Fig. 2: is an isometric view of a machine according to Fig. 1 after said cutting-off a timber section.

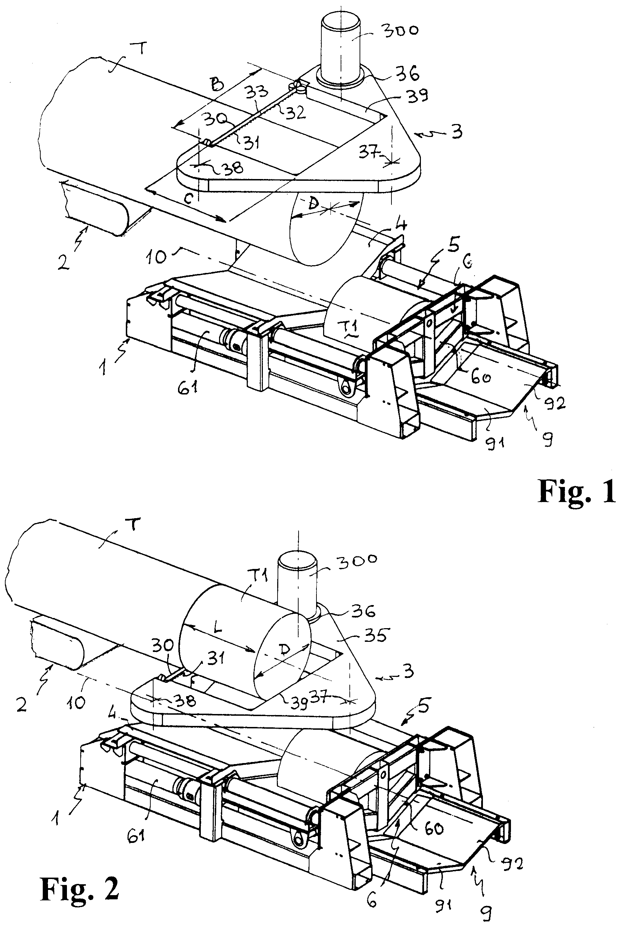

A timber processing and firewood splitting machine, which is presented in Figs. 1 and 2, comprises
- a self-standing bearing frame 1, which is suitable for being placed on the ground;
- a conveying unit 2, which is arranged in one terminal area of said bearing frame 1 and is adjusted for step-by-step forwarding of a timber T of a pre-determined diameter D in the longitudinal direction 10 of said bearing frame 1;
- a cutting unit 3, which is suitable for cutting said timber T to separate longitudinal sections T1 of a pre-determined length L and is arranged in the area above said conveying unit 2;
- a guiding unit 4, which is suitable for guiding of each particular longitudinal timber section T1 in said longitudinal direction and along said geometric axis 10 towards a working area 5, where a splitting assembly 6 is arranged, which is intended for splitting of each longitudinal section T1 of the timber T to several firewood pieces, wherein said splitting assembly 6 comprises at least a splitting unit 60, which is by means of a suitable driving unit 61 displaceable to and fro along said longitudinal geometric axis 10, as well as
- a supporting assembly 9, which is arranged below the bearing frame 1 at a suitable distance above the ground, and which comprises two one towards the other directed flaps 91, 92, which are adjusted for supporting firewood pieces upon being split apart from the rest of said longitudinal section T1 of the timber T and apart from said splitting unit 60, and are mainly maintained in approximately horizontal position, but may also be pivoted into an inclined or even vertical position, when necessary.

According to the invention, said cutting unit 3 is conceived as a band saw with an endless saw band blade 30 with a cutting area 31 which is formed by equally spaced cutting teeth 32 and is directed downwardly towards the ground and towards the guiding unit 4 in the area between said conveying unit 2 for forwarding said timber T and said working area 5 with said splitting unit 6. Said endless saw band blade 31 is bent to form a loop, which is located substantially in a horizontal plane and comprises a straight operational area 33, which is oriented transversally with respect to said longitudinal direction 10 of the bearing framework 1 and also to a direction of forwarding the timber T, and wherein the length B of said straight operational area 33 is longer than the diameter D of a maximal admissible timber T or each belonging longitudinal timber section T1. Said endless saw band blade 31 is, with the exception of said straight operational area 33, embedded within a casing 35 of the cutting unit 3, and is within said casing 35 adjusted to be run over suitable guiding rolls 36, 37, 38, at least one 36 of which is via a suitable shaft connected with a driving means, wherein each of said guiding rolls 36, 37, 38 is adapted both for guiding of said endless saw band blade 30 and also for supporting thereof due to disabling any movement thereof relatively to said rolls 36, 37, 38 and said casing 35 in a vertical direction. Said casing 35 of the cutting unit 3 is mounted on a column 300 and is by means of a suitable driving unit displaceable in a controlled manner in vertical direction at least for a distance, which exceeds maximal admissible diameter D of the timber T, and is moreover in the area adjacent to said straight horizontal working area 33 of the saw band blade 30 in a horizontal plane above said guiding unit 4 furnished with a recess C, the longitudinal dimension of which along said geometric axis 10 in a direction of forwarding of the timber T exceeds the length L of each admissible section T1 of the timber T, while its transversal dimension substantially corresponds to the length B of said straight operational area 33 of the saw band blade 30 and should therefore exceed the maximal diameter D of the timber T or each cut-off timber section T1.

In the shown embodiment, three rolls 36, 36, 38 are foreseen for guiding and driving of said saw band blade 30, which are located within said casing 35 and are each per se rotatable around a corresponding geometric axis and arranged in corners of a virtual equilateral or isosceles triangle, which is symmetric with respect to said longitudinal geometric axis 10, along which the timber T is forwarded, and located in a horizontal plane above said guiding unit 4 in the area between said conveying unit 2 for forwarding said timber T and said working area 5 with said splitting unit 6. The roll 36, which is selected to be a driving roll, is located in the area in which the casing 35 with the endless saw band blade 30 is mounted to said column 300. However, another embodiment might also be used, in which four rolls 36, 36, 38 are foreseen for guiding and driving of said saw band blade 30, which are located within said casing 35 and are each per se rotatable around a corresponding geometric axis and arranged in corners of a virtual square or rectangle, which is symmetric with respect to said longitudinal geometric axis 10, along which the timber T is forwarded, and located in a horizontal plane above said guiding unit 4 in the area between said conveying unit 2 for forwarding said timber T and said working area 5 with said splitting unit 6.

When said casing 35 of the cutting unit 3 is elevated at a sufficient height (Fig. 1), which must exceed at least the diameter D of the timber T, then the timber T can be loaded onto a conveying unit 2, upon which it is by means of said conveying unit 2 forwarded until its front terminal portion reaches the guiding unit 4. Said endless saw band blade 30 is running around said guiding rolls 37, 38 and is driven by means of a driving roll 36, while simultaneously said casing 35 is gradually displaced along the column 300 downwardly towards the ground, so that said endless saw band blade 35 is gradually progressing throughout the timber, which is herewith relatively quickly and with relatively low energy consumption sawn across its complete cross-section (Fig. 2). Upon that, said casing 35 is moved upwardly and returned back to its initial position, upon which due to activation of the conveying unit 2 the timber T is forwarded at a desired distance towards the working area 5, wherein the rest of the timber T pushes the recently cut-off section into the working area 5, in which then it is by means of said splitting unit 6 split to firewood pieces, which are then deposited on said flaps 91, 92 of the supporting unit 9.

## Claims

1. Timber processing and firewood splitting machine, comprising
- a self-standing bearing frame (1), suitable for being placed on the ground;
- a conveying unit (2), which is arranged in one terminal area of said bearing frame (1) and is adjusted for step-by-step forwarding of a timber (T) of a pre-determined diameter (D) in the longitudinal direction (10) of said bearing frame (1);
- a cutting unit (3), which is suitable for cutting said timber (T) to separate longitudinal sections (T1) of a pre-determined length (L) and is arranged in the area above said conveying unit (2);
- a guiding unit (4), which is suitable for guiding of each particular longitudinal timber section (T1) in said longitudinal direction and along said geometric axis (10) towards a working area (5), where a splitting assembly (6) is arranged, which is intended for splitting of each longitudinal section (T1) of the timber (T) to several firewood pieces, wherein said splitting assembly (6) comprises at least a splitting unit (60), which is by means of a suitable driving unit (61) displaceable to and fro along said longitudinal geometric axis (10), as well as
- a supporting assembly (9), which is arranged below the bearing frame (1) at a suitable distance above the ground, and which comprises two one towards the other directed flaps (91, 92), which are adjusted for supporting firewood pieces upon being split apart from the rest of said longitudinal section (T1) of the timber (T) and apart from said splitting unit (60), and are mainly maintained in approximately horizontal position, but may also be pivoted into an inclined or even vertical position, when necessary, **characterized in that**
said cutting unit (3) is conceived as a band saw with an endless saw band blade (30) with a cutting area (31) which is formed by equally spaced cutting teeth (32) and is directed downwardly towards the ground and towards the guiding unit (4) in the area between said conveying unit (2) for forwarding said timber (T) and said working area (5) with said splitting unit (6), wherein said endless saw band blade (31) is bent to form a loop, which is located substantially in a horizontal plane and comprises a straight operational area (33), which is oriented transversally with respect to said longitudinal direction (10) of the bearing framework (1) and also to a direction of forwarding the timber (T), and wherein the length (B) of said straight operational area (33) is longer than the diameter (D) of a maximal admissible timber (T) or each belonging longitudinal timber section (T1),
and wherein said endless saw band blade (31) is, with the exception of said straight operational area (33), embedded within a casing (35) of the cutting unit (3), and is within said casing (35) adjusted to be run over suitable guiding rolls (36, 37, 38), at least one (36) of which is via a suitable shaft connected with a driving means, wherein each of said guiding rolls (36, 37, 38) is adapted both for guiding of said endless saw band blade (30) and also for supporting thereof due to disabling any movement thereof relatively to said rolls (36, 37, 38) and said casing (35) in a vertical direction,
and wherein said casing (35) of the cutting unit (3) is mounted on a column (300) and is by means of a suitable driving unit displaceable in a controlled manner in vertical direction at least for a distance, which exceeds maximal admissible diameter (D) of the timber (T), and is moreover in the area adjacent to said straight horizontal working area (33) of the saw band blade (30) in a horizontal plane above said guiding unit (4) furnished with a recess (C), the longitudinal dimension of which along said geometric axis (10) in a direction of forwarding of the timber (T) exceeds the length (L) of each admissible section (T1) of the timber (T), while its transversal dimension substantially corresponds to the length (B) of said straight operational area (33) of the saw band blade (30) and should therefore exceed the maximal diameter (D) of the timber (T) or each cut-off timber section (T1).

2. Machine according to Claim 1, **characterized in that** three rolls (36, 37, 38) are foreseen for guiding and driving of said saw band blade (30), which are located within said casing (35) and are each per se rotatable around a corresponding geometric axis and arranged in corners of a virtual equilateral triangle, which is symmetric with respect to said longitudinal geometric axis (10), along which the timber (T) is forwarded, and located in a horizontal plane above said guiding unit (4) in the area between said conveying unit (2) for forwarding said timber (T) and said working area (5) with said splitting unit (6).

3. Machine according to Claim 1, **characterized in that** three rolls (36, 37, 38) are foreseen for guiding and driving of said saw band blade (30), which are located within said casing (35) and are each per se rotatable around a corresponding geometric axis and arranged in corners of a virtual isosceles triangle, which is symmetric with respect to said longitudinal geometric axis (10), along which the timber (T) is forwarded, and located in a horizontal plane above said guiding unit (4) in the area between said conveying unit (2) for forwarding said timber (T) and said working area (5) with said splitting unit (6).

4. Machine according to Claim 1, **characterized in that** four rolls (36, 37, 38) are foreseen for guiding and driving of said saw band blade (30), which are located within said casing (35) and are each per se rotatable around a corresponding geometric axis and arranged in corners of a virtual square, which is symmetric with respect to said longitudinal geometric axis (10), along which the timber (T) is forwarded, and located in a horizontal plane above said guiding unit (4) in the area between said conveying unit (2) for forwarding said timber (T) and said working area (5) with said splitting unit (6).

5. Machine according to Claim 1, **characterized in that** four rolls (36, 37, 38) are foreseen for guiding and driving of said saw band blade (30), which are located within said casing (35) and are each per se rotatable around a corresponding geometric axis and arranged in corners of a virtual rectangle, which is symmetric with respect to said longitudinal geometric axis (10), along which the timber (T) is forwarded, and located in a horizontal plane above said guiding unit (4) in the area between said conveying unit (2) for forwarding said timber (T) and said working area (5) with said splitting unit (6).

6. Machine according to anyone of Claims 2 - 5, **characterized in that** the roll (36), which is selected to be a driving roll, is located in the area in which the casing (35) with the endless saw band blade (30) is mounted to said column (300).

## Patentansprüche

1. Holzbearbeitungs- und Brennholzspaltmaschine, aufweisend:
- einen selbststehenden Tragrahmen (1), der zum Aufstellen auf dem Boden geeignet ist;
- eine Fördereinheit (2), die in einem Endbereich des Tragrahmens (1) angeordnet ist und zum schrittweisen Vorschieben eines Holzes (T) mit einem vorbestimmten Durchmesser (D) in Längsrichtung (10) des Tragrahmens (1) eingerichtet ist;
- eine Schneideinheit (3), die zum Schneiden des Holzes (T) in einzelne Längsabschnitte (T1) einer vorbestimmten Länge (L) geeignet ist und im Bereich oberhalb der Fördereinheit (2) angeordnet ist;
- eine Führungseinheit (4), die geeignet ist, jeden einzelnen Längsholzabschnitt (T1) in der Längsrichtung und entlang der geometrischen Achse (10) zu einem Arbeitsbereich (5) zu führen, wo eine Spaltanordnung (6) angeordnet ist, die dazu bestimmt ist, jeden Längsabschnitt (T1) des Holzes (T) in mehrere Brennholzstücke zu spalten, wobei die Spaltanordnung (6) mindestens eine Spalteinheit (60) aufweist, die mittels einer geeigneten Antriebseinheit (61) entlang der geometrischen Längsachse (10) hin und her verschiebbar ist, sowie
- eine Stützanordnung (9), die unterhalb des Tragrahmens (1) in einem geeignetem Abstand über dem Boden angeordnet ist und zwei zueinander gerichtete Klappen (91, 92) aufweist, die so eingestellt sind, dass sie Brennholzstücke abstützen, wenn sie vom Rest des Längsabschnitts (T1) des Holzes (T) und von der Spalteinheit (60) abgespalten werden und im Wesentlichen in annähernd horizontaler Position gehalten werden, aber bei Bedarf auch in eine geneigte oder sogar vertikale Position geschwenkt werden können, **dadurch gekennzeichnet, dass**
die Schneideinheit (3) als eine Bandsäge mit einem endlosen Sägebandblatt (30) mit einem Schnittbereich (31) konzipiert ist, der durch gleichmäßig beabstandete Schneidzähne (32) gebildet wird und nach unten zum Boden und zur Führungseinheit (4) im Bereich zwischen der Fördereinheit (2) zum Vorschieben des Holzes (T) und dem Arbeitsbereich (5) mit der Spalteinheit (6) gerichtet ist, wobei das endlose Sägebandblatt (31) zu einer Schleife gebogen ist, die im Wesentlichen in einer horizontalen Ebene liegt und einen geraden Arbeitsbereich (33) aufweist, der quer zur Längsrichtung (10) des Tragrahmens (1) und auch zur Vorschubrichtung des Holzes (T) ausgerichtet ist, und wobei die Länge (B) des geraden Arbeitsbereichs (33) größer als der Durchmesser (D) eines maximal zulässigen Holzes (T) oder jedes zugehörigen Holzlängsabschnitts (T1) ist,
und wobei das endlose Sägebandblatt (31) mit Ausnahme des geraden Arbeitsbereichs (33) in ein Gehäuse (35) der Schneideinheit (3) eingebettet ist und innerhalb des Gehäuses (35) so eingestellt ist, dass es über geeignete Führungsrollen (36, 37, 38) läuft, von denen mindestens eine (36) über eine geeignete Welle mit einem Antriebsmittel verbunden ist, wobei jede der Führungsrollen (36, 37, 38) sowohl zur Führung des endlosen Sägebandblatts (30) als auch zu dessen Stützung eingerichtet ist, indem eine Bewegung von diesem relativ zu den Rollen (36, 37, 38) und dem Gehäuse (35) in vertikaler Richtung verhindert wird, und wobei das Gehäuse (35) der Schneideinheit (3) an einer Säule (300) montiert ist und mittels einer geeigneten Antriebseinheit auf kontrollierte Weise in vertikaler Richtung zumindest über eine Distanz verschiebbar ist, die den maximal zulässigen Durchmesser (D) des Holzes (T) überschreitet, und außerdem im Bereich neben dem geraden horizontalen Arbeitsbereich (33) des Sägebandblatts (30) in einer horizontalen Ebene über der Führungseinheit (4) mit einer Aussparung (C) versehen ist, deren Längsabmessung entlang der geometrischen Achse (10) in Vorschubrichtung des Holzes (T) die Länge (L) jedes zulässigen Abschnitts (T1) des Holzes (T) überschreitet, während ihre Querabmessung im Wesentlichen der Länge (B) des geraden Arbeitsbereichs des Sägebandblatts (30) entspricht und daher den maximalen Durchmesser (D) des Holzes (T) bzw. jedes abgeschnittenen Holzabschnitts (T1) überschreiten sollte.

2. Maschine nach Anspruch 1, **dadurch gekennzeichnet, dass** drei Rollen (36, 37, 38) zur Führung und zum Antrieb des Sägebandblatts (30) vorgesehen sind, die sich innerhalb des Gehäuses (35) befinden und jeweils für sich um eine entsprechende geometrische Achse drehbar sind und in den Ecken eines virtuellen gleichseitigen Dreiecks angeordnet sind, das symmetrisch zur geometrischen Längsachse (10) ist, entlang der das Holz (T) transportiert wird, und das sich in einer horizontalen Ebene über der Führungseinheit (4) in dem Bereich zwischen der Fördereinheit (2) zum Vorschieben des Holzes (T) und dem Arbeitsbereich (5) mit der Spalteinheit (6) befindet.

3. Maschine nach Anspruch 1, **dadurch gekennzeichnet, dass** drei Rollen (36, 37, 38) zur Führung und zum Antrieb des Sägebandblatts (30) vorgesehen sind, die sich innerhalb des Gehäuses (35) befinden und jeweils für sich um eine entsprechende geometrische Achse drehbar sind und in den Ecken eines virtuellen gleichschenkligen Dreiecks angeordnet sind, das symmetrisch zur geometrischen Längsachse (10) ist, entlang der das Holz (T) transportiert wird, und das sich in einer horizontalen Ebene über der Führungseinheit (4) in dem Bereich zwischen der Fördereinheit (2) zum Vorschieben des Holzes (T) und dem Arbeitsbereich (5) mit der Spalteinheit (6) befindet.

4. Maschine nach Anspruch 1, **dadurch gekennzeichnet, dass** vier Rollen (36, 37, 38) zur Führung und zum Antrieb des Sägebandblatts (30) vorgesehen sind, die sich innerhalb des Gehäuses (35) befinden und jeweils für sich um eine entsprechende geometrische Achse drehbar sind und in den Ecken eines virtuellen Quadrats angeordnet sind, das symmetrisch zur geometrischen Längsachse (10) ist, entlang der das Holz (T) transportiert wird, und das sich in einer horizontalen Ebene über der Führungseinheit (4) in dem Bereich zwischen der Fördereinheit (2) zum Vorschieben des Holzes (T) und dem Arbeitsbereich (5) mit der Spalteinheit (6) befindet.

5. Maschine nach Anspruch 1, **dadurch gekennzeichnet, dass** vier Rollen (36, 37, 38) zur Führung und zum Antrieb des Sägebandblatts (30) vorgesehen sind, die sich innerhalb des Gehäuses (35) befinden und jeweils für sich um eine entsprechende geometrische Achse drehbar sind und in den Ecken eines virtuellen Rechtecks angeordnet sind, das symmetrisch zur geometrischen Längsachse (10) ist, entlang der das Holz (T) transportiert wird, und das sich in einer horizontalen Ebene über der Führungseinheit (4) in dem Bereich zwischen der Fördereinheit (2) zum Vorschieben des Holzes (T) und dem Arbeitsbereich (5) mit der Spalteinheit (6) befindet.

6. Maschine nach einem der Ansprüche 2 bis 5, **dadurch gekennzeichnet, dass** die Rolle (36), die als Antriebsrolle ausgewählt ist, in dem Bereich angeordnet ist, in dem das Gehäuse (35) mit dem endlosen Sägebandblatt (30) an der Säule (300) montiert ist.

## Revendications

1. Machine de fendage de bois de chauffage et de traitement du bois, comprenant :
- un cadre de support autonome (1), adapté afin d'être placé sur le sol ;
- une unité de convoyage (2), qui est agencée dans une zone terminale dudit cadre de support (1) et est ajustée afin de transférer pas à pas un morceau de bois (T) d'un diamètre prédéterminé (D) dans la direction longitudinale (10) dudit cadre de support (1) ;
- une unité de coupe (3) qui est adaptée afin de couper ledit morceau de bois (T) permettant de séparer des sections longitudinales (T1) d'une longueur prédéterminée (L) et est agencée dans la zone au-dessus de ladite unité de convoyage (2) ;
- une unité de guidage (4), qui est adaptée afin de guider chaque section de bois longitudinale particulière (T1) dans ladite direction longitudinale et le long dudit axe géométrique (10) vers une zone de travail (5), où un ensemble de fendage (6) est agencé, qui est destiné à couper chaque section longitudinale (T1) du morceau de bois (T) en plusieurs morceaux de bois de chauffage, dans laquelle ledit ensemble de fendage (6) comprend au moins une unité de fendage (60) qui peut être déplacée, par le biais d'une unité d'entraînement adaptée (61), en avant et en arrière le long dudit axe géométrique longitudinal (10) ; ainsi que
- un ensemble de support (9), qui est agencé sous le cadre de support (1) à une distance adaptée au-dessus du sol, et qui comprend deux volets orientés l'un vers l'autre (91, 92), qui sont ajustés afin de supporter des pièces de bois de chauffage qui sont séparées du reste de ladite section longitudinale (T1) du morceau de bois (T) et de ladite unité de fendage (60), et sont essentiellement maintenus dans une position approximativement horizontale, mais peuvent également être pivotés dans une position inclinée ou même verticale, si nécessaire,
**caractérisée en ce que**
ladite unité de coupe (3) est conçue comme une scie à bande avec une lame de bande de scie sans fin (30) avec une surface de coupe (31) qui est formée par des dents de coupe à espacement équivalent (32) et est dirigée vers le bas vers le sol et vers l'unité de guidage (4) dans la zone entre ladite unité de convoyage (2) afin de transférer ledit morceau de bois (T) et ladite zone de travail (5) avec ladite unité de fendage (6), dans laquelle ladite lame de bande de scie sans fin (31) est pliée de façon à former une boucle, qui est située sensiblement dans un plan horizontal et comprend une zone opérationnelle droite (33), qui est orientée de manière transversale par rapport à ladite direction longitudinale (10) du cadre de support (1) et également vers une direction de transfert du morceau de bois (T), et dans laquelle la longueur (B) de ladite zone opérationnelle droite (33) est supérieure au diamètre (D) d'un morceau de bois admissible maximal (T) ou de chaque section de bois longitudinale à laquelle il appartient (T1),
et dans laquelle ladite lame de bande de scie sans fin (31), à l'exception de ladite zone opérationnelle droite (33), est intégrée dans un logement (35) de l'unité de coupe (3), et est dans ledit logement (35) ajustée afin de glisser sur des rouleaux de guidage adaptés (36, 37, 38), dont au moins un (36) est raccordé par le biais d'un arbre adapté à un système d'entraînement, dans laquelle chacun desdits rouleaux de guidage (36, 37, 38) est adapté afin de guider ladite lame de bande de scie sans fin (30) et également afin de la supporter du fait de la désactivation de tout mouvement de celle-ci par rapport auxdits rouleaux (36, 37, 38) et audit logement (35) dans une direction verticale,
et dans laquelle ledit logement (35) de l'unité de coupe (3) est monté sur une colonne (300) et peut être déplacé au moyen d'une unité de déplacement adaptée de manière contrôlée dans une direction verticale au moins sur une distance, qui dépasse un diamètre maximal admissible (D) du morceau de bois (T), et est en outre dans la zone adjacente à ladite zone de travail horizontale droite (33) de la lame de bande de scie (30) dans un plan horizontal au-dessus de ladite unité de guidage (4) dotée d'une cavité (C), dont la dimension longitudinale le long dudit axe géométrique (10) dans une direction de transfert du morceau de bois (T) dépasse la longueur (L) de chaque section admissible (T1) du bois (T), tandis que sa dimension transversale correspond sensiblement à la longueur (B) de ladite zone opérationnelle droite (33) de la lame de bande de scie (30) et devrait donc dépasser le diamètre maximal (D) du morceau de bois (T) ou de chaque section de bois coupée (T1).

2. Machine selon la revendication 1, **caractérisée en ce que** trois rouleaux (36, 37, 38) sont prévus afin de guider et d'entraîner ladite lame de bande de scie (30), qui sont situés dans ledit logement (35) et sont chacun en soi rotatifs autour d'un axe géométrique correspondant et agencés dans des angles d'un triangle équilatéral virtuel, qui est symétrique par rapport audit axe géométrique longitudinal (10), le long duquel le morceau de bois (T) est transféré, et situés dans un plan horizontal au-dessus de ladite unité de guidage (4) dans la zone entre ladite unité de convoyage (2) afin de transférer ledit morceau de bois (T) et ladite zone de travail (5) avec ladite unité de fendage (6).

3. Machine selon la revendication 1, **caractérisée en ce que** trois rouleaux (36, 37, 38) sont prévus afin de guider et d'entraîner ladite lame de bande de scie (30), qui sont situés dans ledit logement (35) et sont chacun en soi rotatifs autour d'un axe géométrique correspondant et agencés dans des coins d'un triangle isocèle virtuel qui est symétrique par rapport audit axe géométrique longitudinal (10), le long duquel le morceau de bois (T) est transféré, et situés dans un plan horizontal au-dessus de ladite unité de guidage (4) dans la zone entre ladite unité de convoyage (2) afin de transférer ledit morceau de bois (T) et ladite zone de travail (5) avec ladite unité de fendage (6).

4. Machine selon la revendication 1, **caractérisée en ce que** quatre rouleaux (36, 37, 38) sont prévus afin de guider et d'entraîner ladite lame de bande de scie (30), qui sont situés dans ledit logement (35) et sont chacun rotatifs en soi autour d'un axe géométrique correspondant et agencés dans des coins d'un carré virtuel, qui est symétrique par rapport audit axe géométrique longitudinal (10), le long duquel le morceau de bois (T) est transféré, et situés dans un plan horizontal au-dessus de ladite unité de guidage (4) dans la zone entre ladite unité de convoyage (2) afin de transférer ledit morceau de bois (T) et ladite zone de travail (5) avec ladite unité de fendage (6).

5. Machine selon la revendication 1, **caractérisée en ce que** quatre rouleaux (36, 37, 38) sont prévus afin de guider et d'entraîner ladite lame de bande de scie (30), qui sont situés dans ledit logement (35) et sont chacun en soi rotatifs autour d'un axe géométrique correspondant et agencés dans des coins d'un rectangle virtuel, qui est symétrique par rapport audit axe géométrique longitudinal (10), le long duquel le morceau de bois (T) est transféré, et situés dans un plan horizontal au-dessus de ladite unité de guidage (4) dans la zone entre ladite unité de convoyage (2) afin de transférer ledit morceau de bois (T) et ladite zone de travail (5) avec ladite unité de fendage (6).

6. Machine selon l'une quelconque des revendications 2 à 5, **caractérisée en ce que** le rouleau (36), qui est sélectionné afin d'être un rouleau d'entraînement, est situé dans la zone dans laquelle le logement (35) avec la lame de bande de scie sans fin (30) est monté sur ladite colonne (300).
